# DEMANDE DE BREVET EUROPEEN

(11) **EP 0 534 834 A1**
(43) Date de publication de la demande: **31.03.1993**
(21) Numéro de dépôt: 92402585.1
(22) Date de dépôt: 21.09.1992
(51) Int. Cl.: F15B 20/00, F15B 11/08

(54) **Equipement hydraulique à commande de sécurité**

(30) Priorité: 25.09.1991 FR 9111811
(71) Demandeur: MESSIER BUGATTI, F-78140 Velizy Villacoublay (FR)
(72) Inventeur: Rouzaud, Dominique, F-91470 Angervilliers (FR)
(74) Mandataire: Fruchard, Guy

(57) **Abrégé**

L'équipement comporte un corps (8), un piston (9) monté pour coulisser dans le corps et rappelé vers une position de repos par un organe élastique (11), le piston (9) délimitant avec le corps (8) une chambre d'actionnement (12) opposée à l'organe élastique (11) et reliée à un orifice de sortie (6) d'une vanne de commande (4) assurant une liaison de l'orifice de sortie (6) soit avec une ligne d'alimentation (3) soit avec une ligne de retour (7), l'équipement comporte une chambre de sécurité de mise au repos (13) reliée à la ligne de retour (7), et communiquant avec une face du piston (9) opposée à la chambre d'actionnement (12) sur une surface active (14) supérieure à une surface active (15) du piston du côté de la chambre d'actionnement (12).

## Description

La présente invention concerne un équipement hydraulique à commande de sécurité.

On sait que les circuits hydrauliques servant à alimenter des équipements hydrauliques, notamment à bord des avions, comportent généralement un réservoir de stockage de liquide hydraulique auquel est reliée une pompe assurant la mise en pression du liquide hydraulique pour fournir du liquide hydraulique sous pression à une ligne d'alimentation d'une série d'équipements hydrauliques montés en parallèle entre cette ligne d'alimentation et une ligne de retour reliée au réservoir de liquide hydraulique qui est normalement maintenu à une pression basse. Si l'un des équipements hydrauliques, ou une vanne de commande de l'un des équipements hydrauliques, est défaillant, il existe un risque momentané de court-circuit hydraulique à travers cet équipement, c'est-à-dire que la pression d'alimentation est momentanément transmise dans la ligne de retour du circuit hydraulique.

Par ailleurs, on sait que certains équipements hydrauliques sont commandés par une vanne de commande ayant un orifice de sortie relié à une chambre d'actionnement de l'équipement, la vanne de commande étant configurée pour assurer une liaison de son orifice de sortie soit avec la ligne d'alimentation, soit avec la ligne de retour en fonction de l'état de la vanne de commande, cet état étant déterminé soit par une commande électrique soit par un actionnement manuel. En fonctionnement normal, la chambre d'actionnement de l'équipement hydraulique est mise sous pression lorsque la vanne de commande est dans un état correspondant à une liaison de la ligne d'alimentation avec l'orifice de sortie de la vanne de commande tandis que la chambre d'actionnement est à basse pression lorsque la vanne de commande assure une liaison de l'orifice de sortie avec la ligne de retour. Toutefois, dans le cas où une montée en pression survient dans la ligne de retour, cette surpression se transmet à la chambre d'actionnement de l'équipement hydraulique et actionne donc celui-ci de façon intempestive.

Un tel risque ne peut être accepté en particulier lorsque l'équipement hydraulique assure la commande de position d'un organe dont la mise en oeuvre intempestive a des conséquences graves. C'est le cas en particulier pour les vérins de commande des volets d'inversion de poussée des réacteurs d'un avion.

Un but de la présente invention est de proposer un équipement hydraulique comportant une commande de sécurité supprimant ce genre de risque.

En vue de la réalisation de ce but, on propose selon l'invention un équipement hydraulique comportant un corps, un piston monté pour coulisser dans le corps et rappelé vers une position de repos par un organe élastique, le piston délimitant avec le corps une chambre d'actionnement opposée à l'organe élastique et reliée à un orifice de sortie d'une vanne de commande assurant une liaison de l'orifice de sortie soit avec une ligne d'alimentation soit avec une ligne de retour, cet équipement comportant une chambre de sécurité de mise au repos reliée à la ligne de retour et communiquant avec une face du piston opposée à la chambre d'actionnement sur une surface active supérieure à une surface active du piston du côté de la chambre d'actionnement.

Ainsi, lorsque la chambre d'actionnement de l'équipement hydraulique est reliée à la ligne de retour, la résultante des forces agissant sur le piston tend toujours à maintenir celui-ci dans sa position de repos quelle que soit la pression dans la ligne de retour.

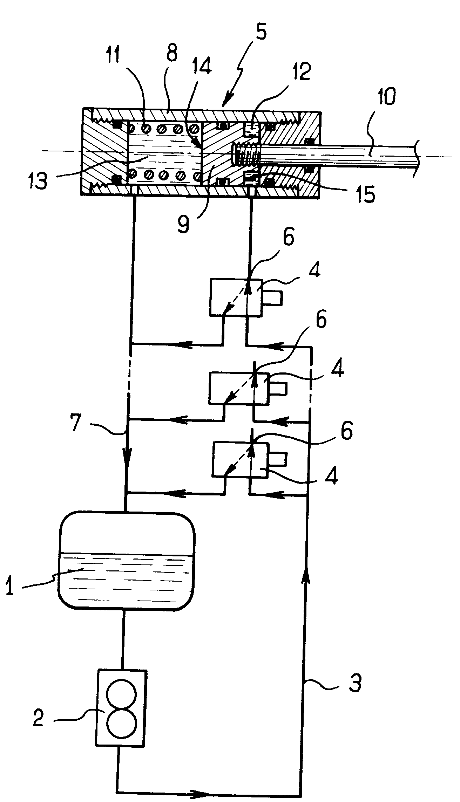

L'invention sera mieux comprise à la lecture de la description qui suit d'un mode de réalisation particulier non limitatif de l'invention en liaison avec la figure unique ci-jointe qui est une représentation schématique d'un vérin hydraulique représenté en coupe axiale et associé à un circuit hydraulique.

En référence au dessin, le circuit hydraulique comprend de façon classique un réservoir de liquide hydraulique 1 normalement maintenu à basse pression associé à une pompe hydraulique 2 dont la sortie haute pression est reliée à une ligne d'alimentation 3 desservant une série de vannes de commande 4 servant à commander l'alimentation de différents équipements hydrauliques 5 dont un seul a été représenté sur la figure. A cet effet, chaque vanne de commande 4 comporte un orifice de sortie 6 qui, selon l'état de la vanne de commande 4, est relié soit à la ligne d'alimentation 3 comme représenté par une flèche en trait continu sur la figure, soit à une ligne de retour 7 selon une liaison de retour représentée par une flèche tiretée sur la figure. La ligne de retour 7 est reliée au réservoir de liquide hydraulique 1. On remarque que si l'une des vannes de commande 4 est défaillante et réalise un court-circuit hydraulique entre la ligne d'alimentation 3 et la ligne de retour 7, la haute pression de la ligne d'alimentation 3 est transmise à la ligne de retour 7 jusqu'à ce que la vanne de commande correspondante ait été mise hors circuit. Cette montée en pression est normalement amortie par le maintien du réservoir hydraulique 1 à une pression basse. Toutefois, si une vanne de commande d'un autre équipement est. reliée à la ligne de retour 7 en un point plus proche de la vanne de commande défaillante que le réservoir hydraulique 1, l'équipement hydraulique correspondant se trouve actionné. En particulier, dans la figure illustrée, l'équipement hydraulique 5 est un vérin hydraulique comportant un corps 8 dans lequel un piston 9 est monté pour coulisser et est associé à une tige de manoeuvre 10. Le piston 9 est normalement rappelé vers une position de repos par un organe élastique formé par un ressort 11. Le piston 9 délimite avec le corps 8 une chambre d'actionnement 12 opposée au ressort 11 et reliée à l'orifice de sortie 6 de la vanne de commande 4 qui lui est associée.

Selon l'invention, l'équipement hydraulique 5 comporte également une chambre de sécurité de mise au repos 13 reliée à la ligne de retour 7. La chambre de sécurité de mise au repos 13 est en communication avec une face 14 du piston 9 opposée à la chambre d'actionnement 12. La surface active 14 du piston 9 du côté de la chambre de sécurité de mise au repos 13, est supérieure à la surface active 15 du piston 9 du côté de la chambre d'actionnement 12.

Ainsi, lorsqu'une surpression accidentelle survient dans la ligne de retour 7 alors que la vanne de commande 4 est dans une position assurant une liaison de l'orifice de sortie 6 avec la ligne de retour 7, cette surpression est transmise sur les deux côtés du piston 9 et, en raison de la différence des surfaces actives, le piston 9 est maintenu dans la position de repos illustrée sur la figure.

Bien entendu l'invention n'est pas limitée au mode de réalisation illustré et on peut y apporter des variantes de réalisation sans sortir du cadre de l'invention. En particulier, bien qu'un seul équipement hydraulique ait été représenté sur la figure, plusieurs équipements hydrauliques peuvent être réalisés conformément à l'invention, la chambre de sécurité de mise au repos de chacun des équipements hydrauliques étant reliée à la ligne de retour 7.

De même, bien que l'équipement hydraulique représenté soit un vérin, l'invention s'applique également à un distributeur hydraulique équipé d'un piston d'actionnement coulissant ou rotatif.

## Revendications

1. Equipement hydraulique comportant un corps (8), un piston (9) monté pour coulisser dans le corps et rappelé vers une position de repos par un organe élastique (11), le piston (9) délimitant avec le corps (8) une chambre d'actionnement (12) opposée à l'organe élastique (11) et reliée à un orifice de sortie (6) d'une vanne de commande (4) assurant une liaison de l'orifice de sortie (6) soit avec une ligne d'alimentation (3) soit avec une ligne de retour (7), caractérisé en ce qu'il comporte une chambre de sécurité de mise au repos (13) reliée à la ligne de retour (7), et communiquant avec une face du piston (9) opposée à la chambre d'actionnement (12) sur une surface active (14) supérieure à une surface active (15) du piston du côté de la chambre d'actionnement (12).
